Europäisches Patentamt

**European Patent Office**

Office européen des brevets

(11) Veröffentlichungsnummer: **0 095 580**
A2

(12) # EUROPÄISCHE PATENTANMELDUNG

(21) Anmeldenummer: **83103987.0**

(22) Anmeldetag: **23.04.83**

(51) Int. Cl.³: **C 08 G 65/28, C 11 D 1/835**

(30) Priorität: **27.05.82 DE 3220012**

(43) Veröffentlichungstag der Anmeldung: **07.12.83**
**Patentblatt 83/49**

(84) Benannte Vertragsstaaten: **AT BE CH FR GB IT LI NL SE**

(71) Anmelder: **Akzo GmbH,**
**Postfach 10 01 49 Kasinostrasse 19-23,**
**D-5600 Wuppertal-1 (DE)**

(72) Erfinder: **Seibert, Karl, Dipl.-Ing., Am Hinzenbusch 62,**
**D-5160 Düren 16 (DE)**
Erfinder: **Rörig, Hans, Dechant-Fabry-Strasse 10,**
**D-5161 Merzenich-Girbelsrath (DE)**

(54) **Polyätherderivate, deren Verwendung als Dispergatoren in Mitteln zum Weichspülen von Textilien auf der Basis quaternärer Ammoniumsalze sowie Verfahren zur Herstellung der Mittel zum Weichspülen.**

(57) Polyätherderivat, hergestellt durch stufenweise Anlagerung von 1–10 Molen je anlagerungsfähiger OH-Gruppe von langkettigen 1,2 Epoxiden mit einer Kettenlänge von 6–32 C-Atomen bei Temperaturen von 100–200 °C Polyäthylenglykol-Kondensationsverbindungen mit mittlerem Molekulargewicht jeder Polyätherkette 200–5000 bzw. Polyäthylenglykolpolypropylenglykol-Kondensationsverbindungen mit mittlerem Molekulargewicht jeder Polyätherkette 250–6000 deren Ketten Blöcke bilden, wobei jeder Polypropylenglykolblock ein mittleres Molekulargewicht von höchstens 1000 aufweist und jeder Polyäthylenglykolblock mit ein- oder mehrwertigen Alkoholen, Phenolen, Aminen und/oder Amiden kondensiert ist, wobei die Zahl der ersetzten aktiven Wasserstoffatome 1–6 beträgt, unter Verwendung von 0,1 bis 1 Gew.-% Alkalihydroxid. Die Polyätherderivate werden vorzugsweise in konzentrierten Weichspülerdispersionen auf Basis quaternärer Ammoniumsalze verwendet, wobei die Mittel zum Weichspülen von Textilien enthalten: 8–25 Gew.-% von als Weichspüler geeigneten quaternären Ammoniumsalze, 0,1–10 Gew.-% eines Polyätherdrivates gegebenenfalls 0,1–5 Gew.-% eines anorganischen Salzes sowie Wirkstoffe wie Farbstoffe, Duftstoffe u.ä. und 60–91,9 Gew.-% Wasser.

0095580

Polyätherderivate, deren Verwendung als Dispergatoren
in Mitteln zum Weichspülen von Textilien auf der Basis
quaternärer Ammoniumsalze sowie Verfahren zur Herstellung der Mittel zum Weichspülen.

A k z o   GmbH

Wuppertal

*   *   *

Die Erfindung betrifft neue Polyätherderivate und deren Verwendung in konzentrierten Weichspüler-Dispersionen, die als
Mittel zum Weichspülen von Textilien auf der Basis quaternärer Ammoniumsalze eingesetzt werden.

Mittel zum Weichspülen von Textilien auf der Basis quaternärer
Ammoniumsalze sind bekannt und werden üblicherweise im Anschluß
an den letzten Waschvorgang dem Spülwasser zugesetzt. Diese Zugabe soll den Verlust an Arvivage ausgleichen, der beim Waschen
erfolgte, und durch den die Gewebe ihren ursprünglichen weichen
Griff verloren haben. Weichspülmittel sind Dispersionen unterschiedlicher Viskosität, die als Wirksubstanz hauptsächlich quaternäre Ammoniumsalze mit 1 oder 2 längeren Alkylketten enthalten. Als geeignete quaternäre Verbindungen sind beispielsweise Dialkyldimethylammonium-Verbindungen oder 1-Methyl-1-Alkyl-amidoäthyl-2-Alkylimidazolinium-Verbindungen bekannt. Das Kation solcher Verbindungen hat ausgeprägte Affinität zu Cellulose-Eiweiß und Synthese-Fasern, zieht also substantiv auf und reichert sich auf ihnen an. Die durch Adhesions-Kräfte zwischen den Fasern verursachte Wasserstarre wird aufgehoben und der Reibungswiderstand vermindert. Die Wäsche läßt sich nach einer solchen Weichspülbehandlung auch deutlich leichter bügeln. Außer dieser Weichmacherwirkung ergeben aus synthetischen Fasern die Weichspülmittel einen guten antistatischen Effekt, so daß die störende elektrostatische Aufladung der Textilien und damit das Kleben am Körper verhindert wird.

Die bisher üblichen Weichspüldispersionen haben einen Aktivgehalt von ca. 4 - 6 %. Es gibt zwar auch bereits einige konzentrierte Weichspüler, die 12 - 15 % Aktivgehalt aufweisen. Deren Lagerstabilität bezüglich Viskosität bzw. Dispersion weist jedoch deutliche Nachteile auf. Darüber hinaus entsprechen auch die selbstemulgierenden Eigenschaften der bekannten Weichspüler-Dispersionen bisher nicht den an sie gestellten Anforderungen, so daß das Einspülverhalten noch sehr zu wünschen übrig läßt.

Aus der DE-AS 24 46 589 ist ein Mittel zum Weich- und Antistatischmachen von Geweben bestehend aus einer wasserunlöslichen weichmachend und antistatisch wirkenden Komponente aus einer quaternären Verbindung einem elektrisch-leitenden Aluminiumsalz, einem nichtlöslichmachenden flüssigen Träger und einem langkettigen Fettsäureamid-Dispersions-Stabilisator bekannt.

Aus der DE-OS 29 11 198 ist ein konzentriertes Wäsche-Weichspülmittel und Verfahren zu dessen Herstellung bekannt wobei
ebenfalls quaternäre Ammoniumsalze den eigentlichen Gewebe-
Weichmacher darstellen.
Als Antigelmittel enthalten die Dispersionen Aluminiumsalze
und gegebenenfalls Salze von Metallen der 1. und 2. Hauptgruppe. Weiterhin enthalten diese Dispersionen einen Kältestabilisator, der aus mindestens einer Verbindung der Gruppe
der nichtionischen oberflächenaktiven Mittel bestehen soll,
wobei es sich gemäß den Angaben der Schrift um Alkyläthoxylate, Alkylphenyläthoxylate oder Alkylamidäthoxylate handelt.
Die Konzentration an Aktivsubstanz beträgt bei dem in der
DE-OS 29 11 198 beschriebenen Weichspülmittel 8 - 25 Gew.-%.

Aufgabe der vorliegenden Erfindung waren neue Dispergatoren
für rührfähige, lagerstabile Weichspüleremulsionen mit möglichst hohem Aktivgehalt und einer unveränderten oder wenig
veränderten Viskosität von weniger als 100 mPa s bei der Lagerung bei Zimmertemperatur, einer Temperaturbeständigkeit bei
40 - 50 °C und häufigen Gefrier-Tau-Zyklen zwischen 0 °C und
Raumtemperatur mit einem reversiblen Viskositätsverhalten. Diese Aufgabe wird gelöst durch Polyätherderivate wie sie in den
Ansprüchen charakterisiert sind.

Die Polyätherderivate entsprechen in ihrer Zusammensetzung der
allgemeinen Formel

$$Z\left[\left[CH_2-CH_2-O\right]_a-\left[CH_2-\underset{CH_3}{CH}-O\right]_b-\left[CH_2-\underset{R}{CH}-O\right]_c\right]_d$$

Darin bedeuten

$Z$ = ein- oder mehrwertige Alkohole einschließlich
der Saccharide, Phenole
einschließlich der Alkylphenole, Amine oder Amide

a = Mole Äthylenoxid = 5 - 115 (Mittelwert)
b = Mole Propylenoxid = 0 - 15 (Mittelwert)
c = Mole an langkettigem Epoxid 1 - 10 (Mittelwert)
d = Zahl der ersetzten aktiven Wasserstoffatome
der Alkohole, Phenole, Amine oder Amide
(Mittelwert)
R = Alkylrest mit 6 - 32 Kohlenstoffatomen.

Je nachdem, wie das Polyätherderivat erfindungsgemäß eingesetzt wird und welcher Art der Molekülteil Z ist, ergeben sich
für a - d und für R unterschiedliche Grenzwerte.

Stellt Z einen Saccharidrest dar, so betragen erfindungsgemäß
a = 5 - 80 vorzugsweise 6 - 45 (Mittelwert)
b = 0 - 5 (Mittelwert)
c = 1 - 10 vorzugsweise 1 - 3 (Mittelwert)
d = 1 - 6 vorzugsweise 1 - 3 (Mittelwert)
und vorzugsweise ist R ein Alkylrest mit 10 - 24 C-Atomen.

Stellt Z einen einwertigen Alkoholrest dar, so betragen erfindungsgemäß
a = 10 - 100 vorzugsweise 20 - 80 (Mittelwert)
b = 0 - 3 (Mittelwert)
c = 1 - 5 vorzugsweise 1 - 3 (Mittelwert)
d = 1
wobei R vorzugsweise ein Alkylrest mit 12 - 18 C-Atomen ist.

Stellt Z einen Polyalkoholrest mit 3 - 6 Hydroxylgruppen, wie beispielsweise einen Glyzerinrest oder Pentaerythritrest dar, so betragen erfindungsgemäß

$$a = 10 - 100 \quad \text{vorzugsweise} \quad 20 - 80$$
$$b = 0 - 3$$
$$c = 1 - 5 \quad \text{vorzugsweise} \quad 1 - 3$$
$$d = 3 - 6$$

wobei R vorzugsweise ein Alkylrest mit 12 - 18 C-Atomen ist.

Stellt Z einen Amin- und/oder Amidrest dar, so betragen erfindungsgemäß

$$a = 5 - 100 \quad \text{vorzugsweise} \quad 10 - 80$$
$$b = 0 - 3$$
$$c = 1 - 5 \quad \text{vorzugsweise} \quad 1 - 3$$
$$d = 1 - 4$$

wobei R vorzugsweise ein Alkylrest mit 12 - 18 C-Atomen ist.

Die Polyätherderivate, die sich von Aminen und/oder Amiden ableiten können sowohl als freie Amine und/oder Amide oder in Form ihrer Salze vorliegen. Die Salzbildung erfolgt in bekannter Weise durch Neutralisation mit Säuren, wie beispielsweise Salzsäure, Schwefelsäure oder Essigsäure.

Verfahren zur Herstellung der erfindungsgemäßen Polyätherverbindung sind für analoge Produkte beschrieben, beispielsweise in Houben Weyl Methoden der organischen Chemie, Bd. 14,24, 4. Auflage, 1963, Georg Thieme Verlag Stuttgart, Seiten 436 bis 450; Journal für praktische Chemie, 1965, Seiten 300 bis 303; J. Am. Oil Chemist Soc., Vol 38 (1961), Seiten 410 bis 418.

Die dort beschriebenen Verfahren können ohne weiteres auf die Herstellung der erfindungsgemäßen Produkte in analoger Weise übertragen werden.

Erfindungsgemäß werden die Polyätherderivate als Dispergatoren in konzentrierten Weichspülerdispersionen auf der Basis von quaternären Ammoniumsalzen verwendet. Vorzugsweise werden sie in mindestens 10 Gew.-% Aktivsubstanz enthaltenden Weichspülerdispersionen auf der Basis von quaternären Ammoniumsalzen verwendet.

Erfindungsgemäß sind die Mittel zum Weichspülen von Textilien auf der Basis von quaternären Ammoniumsalzen so zusammengesetzt, daß die Dispersion enthält:

8 - 25 Gew.-% von an sich bekannten und als Weichspüler geeigneten quaternären Ammoniumsalzen, 0,1 - 10 Gew.-% eines Dispergators gemäß den Ansprüchen 1 - 11, gegebenenfalls 0,1 - 5 Gew.-% eines anorganischen Salzes von Elementen der 1. - 3. Hauptgruppe des Periodensystems sowie Wirkstoffe wie Farbstoffe, Duftstoffe u. ä. und 60 - 91,9 Gew.-% Wasser.

Es ist ohne weiteres möglich, den erfindungsgemäßen Dispergator mit Dispergatoren des Standes der Technik zu verschneiden. Überraschend zeigte es sich dabei, daß die Eigenschaften des erfindungsgemäßen Dispergators auch in derartigen Mischungen nicht an Gewicht verlieren.

Für das erfindungsgemäße Mittel zum Weichspülen von Textilien ist die Zugabe von Salzen von Elementen der 1. - 3. Hauptgruppe nicht erforderlich, weil die erfindungsgemäßen Polyätherderivate nicht nur als Dispergatoren wirken, sondern
gleichzeitig eine deutliche Antigelierwirkung zeigen.

Trotzdem werden aus ökonomischen Gründen gegebenenfalls auch
Salze als Antigeliermittel zugesetzt, die jedoch selbst in
wesentlich größeren Anteilen, allein nicht ausreichen, um die
gewünschte Wirkung zu erzielen.

Als Salze kommen in Frage Kochsalz, Glaubersalz, Aluminiumchlorid, Aluminiumsulfat, Calcium-Magnesiumchlorid, auch im
Gemisch untereinander. Auch Natriumdihydrogenphosphat ist als
Salzzusatz geeignet und bietet dabei den Vorteil einer einfachen Einstellung der Dispersion auf einen $P_H$-Wert von 4 - 5.

Mit den erfindungsgemäßen Polyätherderivaten erzielt man bei
Weichspülern die folgenden Vorteile.

Der Dispergator wirkt sowohl als Lagerstabilisator, als
Kältestabilisator als auch als Antigeliermittel. Er besitzt eine Selbstemulgierfähigkeit, verstärkt die Weichspülerwirkung und ermöglicht Weichspülerdispersionen mit
bis zu 25 Gew.-%-Anteil an Aktivsubstanz. Die Mittel zum
Weichspülen von Textilien, die die erfindungsgemäßen Polyätherderivate enthalten, zeigen ein günstiges Viskositätsverhalten bei der Herstellung und der Lagerung der
Dispersionen sowie beim Gebrauch. Durch die günstigen
Eigenschaften der Polyätherderivate ergibt sich eine
hervorragende Einspülbarkeit in die Waschmaschine und
keine nachteilige Veränderung während des Waschvorganges,
wenn das Weichspülmittel bereits vor der Wäsche in eine
Einspülkammer gegeben wird.

Die Herstellung des Mittels zum Weichspülen von Textilien erfolgt in einer Ausgestaltungsform der Erfindung dadurch, daß man den Dispergator in der vorgesehenen Menge Wasser löst und in diese Lösung bei 45 - 70 °C das quaternäre Ammoniumsalz und gegebenenfalls gleichmäßig, gleichzeitig aber getrennt 0,5 Gew.-%, bezogen auf die fertige Dispersion, einer 15%igen wäßrigen Lösung eines anorganischen Salzes von Elementen der 1. - 3. Hauptgruppe des Periodensystems einbringt.

Aufgrund der Eigenschaften ergeben sich verfahrenstechnische Vorteile bei der Herstellung des Mittels zum Weichspülen von Textilien, dadurch, daß die Antigeliereigenschaft in Verbindung mit der Selbstemulgierfähigkeit die Beherrschung der Gelphasen bei der Verdünnung mit Wasser ermöglicht.

So erfolgt die Herstellung des Mittels zum Weichspülen von Textilien in einer anderen Ausgestaltungsform der Erfindung dadurch, daß Dispergator und quaternäres Ammoniumsalz zunächst bei 45 - 70 °C homogen gemischt werden und diese Mischung in die vorgesehene Menge Wasser von 45 - 70 °C eingebracht wird.

Aufgrund der erwähnten Eigenschaften des Dispergators ist auch möglich, in einer weiteren Ausgestaltungsform der Erfindung die Herstellung des Mittels zum Weichspülen von Textilien so zu gestalten, daß Dispergator und quaternäres Ammoniumsalz zunächst bei 45 - 70 °C homogen gemischt werden und daß in diese Mischung die vorgesehene Menge Wasser von 45 - 70 °C eingebracht wird.

Zur Prüfung der Eigenschaften wurden folgende Testmethoden angewandt.

## 1. Test der selbstemulgierenden Eigenschaften

In ein mit kaltem Wasser gefülltes Becherglas wird ca.
1 - 2 ml der Weichspüler-Dispersion ohne Rühren zugegeben.
Dabei wird die selbständige Verteilung der Dispersion im
Wasser beobachtet und nach folgenden Kriterien bewertet:

++ = ausgezeichnete selbstemulgierende Eigenschaften,
kleine Partikel der dispergierten Phase

+ = selbstemulgierend

- = mäßige Selbstemulgierung, größere Partikelgröße der
dispergierten Phase, teilweise Separation der Dispersion

-- = Separation der Dispersion in Wasser

## 2. Test der Haftung der Dispersion an Glaswand

Ungefähr 3 - 5 ml der Weichspüler-Dispersion wird in ein
trockenes, sauberes Becherglas gegeben. Dann wird kaltes
Wasser von ca. 10 °C in laminarem Strom eingefüllt und wieder ausgegossen. Anschließend wird die am Boden des Becherglases haftende Restmenge der Weichspüler-Dispersion sowie
deren Abfluß beobachtet und nach folgenden Kriterien bewertet:

++ = geringe Haftung, gute Abflußeigenschaften, gute Verdünnung der Dispersion

+ = geringe Haftung

- = stärkere Haftung, geringe Verdünnung der Dispersion

-- = keine Verdünnung der Dispersion, starke Haftung an
Glaswand

3. Stabilität der Emulsion nach Lagerung

Es wurde bewertet mit:

++ = vollständig stabil

+ = weitgehend stabil bzw. Wiederhomogenisierung der Dispersion durch einmaliges Schütteln der Dispersion

- = geringfügige Trennung der Dispersion, homogenisierbar durch Schütteln der Dispersion

-- = stärkere Phasentrennung

4. Veränderung der Konsistenz der Dispersion nach Lagerung Es wurde bewertet mit:

++ = keine Konsistenzänderung

+ = geringfügig viskoser

- = merklicher Viskositätsanstieg

-- = gelartig

Die nachfolgenden Beispiele sollen die Erfindung weiter erläutern.

Beispiel 1

Im 2 l Glasautoklav werden a g Wasser vorgelegt, b g eines
Saccharides eingetragen und danach d g wäßr. 45%ige KOH unter
Rühren zugegeben.
Anschließend wird auf 75 °C erwärmt und 3mal Stickstoff bis
5 bar aufgedrückt.
Während 3,5 Stunden werden c g Äthylenoxid portionsweise so
eingeleitet, daß sich die Temperatur bei exothermer Reaktion
bei 75 - 80 °C hält und der Druck maximal 4 bar beträgt.
Es wird dann 3 Stunden bei 75 - 80 °C nachreagieren gelassen.
In einem Dreihalskolben, versehen mit Rührer, Thermometer,
Rückflußkühler, Gaseinleitungsrohr und Tropftrichter werden
e g des erhaltenen Äthoxilates vorgelegt und unter $N_2$-Durch-
leiten auf 75 °C erwärmt. Bei dieser Temperatur wird 0,5 Stunden mit $N_2$ gespült und dann unter $N_2$-Durchleiten in 0,25 Stunden auf 105 °C erwärmt.
Während 2 Stunden werden f g eines langkettigen Epoxides z
bei leichtem $N_2$-Strom zugetropft.
Es wird 4 Stunden bei 110 °C nachreagieren gelassen.

Die hergestellten Produkte 1 - 5 ergeben sich im einzelnen
aus der nachfolgenden tabellarischen Zusammenstellung.

T a b e l l e   1

| Ausgangs-saccharide | a | b | | c | | d | Zwischenprodukte | | |
|---|---|---|---|---|---|---|---|---|---|
| | (g) | (g) | (Mol) | (g) | (Mol) | (g) | | | |
| Saccharose | 250 | 684,6 | 2 | 704,8 | 16 | 30,43 | A | Saccharose + 8 ÄO | |
| Saccharose | 175 | 479,22 | 1,4 | 925,05 | 21 | 21,3 | B | Saccharose + 15 ÄO | |
| D-Sorbit | 133,59 | 400,77 | 2,2 | 775,28 | 17,6 | 17,81 | C | D-Sorbit + 8 ÄO | |
| Pentaerythrit | 136 | 136 | 1 | 352,4 | 8 | 6,04 | D | Pentaerythrit + 8 ÄO | |

| Endprodukt | Zwischenprodukte | | e | | z | f | |
|---|---|---|---|---|---|---|---|
| | | | (g) | (Mol) | | (g) | (Mol) |
| 1 | Saccharose + 8 ÄO | (A) | 1669,83 | 2 | 1-Epoxydodecan | 368 | |
| 2 | Saccharose + 15 ÄO | (B) | 1600,57 | 1,4 | 1-Epoxydodecan | 257,6 | 1,4 |
| 3 | D-Sorbit + 8 ÄO | (C) | 1327,45 | 2,2 | 1-Epoxydodecan | 404,8 | 2,2 |
| 4 | Pentaerythrit + 8 ÄO | (D) | 630,44 | 1 | 1-Epoxydodecan | 184 | 1 |
| (E) | Saccharose + 8 ÄO | (A) | 1669,83 | 2 | Propylenoxid | 464 | 8 |
| 5 | Saccharose + 8 ÄO + 4 PO | (E) | 2130 | 2 | 1-Epoxydodecan | 256 | 2 |

- 12 -

0095580
A3HD32023 EP

## Beispiel 2

Ein Stahlautoklav wird mehrmals evakuiert und mit Stickstoff
begast. Unter schwachem $N_2$-Strom werden a g eines ein- oder
mehrwertigen Alkohols bzw. Amins im geschmolzenen Zustand eingefüllt.

Anschließend werden 0,3 % KOH 100%ig, bezogen auf das zu äthoxylierende Produkt als 45%ige wäßrige Lösung unter Rühren
zugegeben.

Dann wird im Wasserstrahlvakuum evakuiert und auf 100 °C erwärmt und während 1 Stunde bei 100 °C gehalten.

Danach wird mit $N_2$ entspannt und in ca. 0,1 Stunde auf 180 °C
erhitzt.

Bei 180 $\pm$ 5 °C werden b g Äthylenoxid zudosiert, $P_{max}$ = 7 bis
8 bar, und bei 180 °C 1 Stunde nachreagieren gelassen, bis der
Überdruck abgefallen ist.

Zur Entnahme des Produktes wird auf 60 °C abgekühlt.

In einem Dreihalskolben mit Rührer, absteigendem Kühler, Tropftrichter, Thermometer und Gaseinleitungsrohr werden c g des erhaltenen Äthoxylates 0,5 Stunden unter $N_2$ auf 80 °C erhitzt
und d g KOH-Pulver (90%ig) zugegeben.

Anschließend wird bei 80 °C 0,5 Stunden mit $N_2$ gespült und
dann Wasserstrahlvakuum (13 mm Hg) angelegt.

Im Vakuum wird in 0,5 Stunden auf 140 °C erhitzt und 1 Stunde
bei 140 °C im Vakuum gehalten.

Danach wird mit $N_2$ entspannt und bei 140 °C e g des langkettigen Epoxides z in 1 Stunde unter leichtem $N_2$-Strom zugetropft.
Bei 140 °C wird 2 Stunden nachreagieren gelassen.

Die hergestellten Produkte 8 - 13 ergeben sich im einzelnen aus
der nachfolgenden tabellarischen Zusammenstellung.

Tabelle 2

| Ausgangs-produkte | a | | b | | Zwischenprodukte | |
|---|---|---|---|---|---|---|
| | (g) | (Mol) | (g) | (Mol) | | |
| Glycerin | 92,1 | 1 | 881 | 20 | Glycerin + 20 ÄO | (F) |
| Glycerin | 92,1 | 1 | 2643 | 60 | Glycerin + 60 ÄO | (G) |
| Glycerin | 92,1 | 1 | 3524 | 80 | Glycerin + 80 ÄO | (H) |
| Talgalkohol | 261 | 1 | 2643 | 60 | Talgalkohol + 60 ÄO | (J) |
| hydriertes primäres Talgamin | 275 | 1 | 2202 | 50 | hydriertes primäres Talgamin + 50 ÄO | (K) |
| ALFOL C 12 | 189,5 | 1 | 881 | 20 | ALFOL C 12 + 20 ÄO | (L) |

| Endprodukt | Zwischenprodukte | | c | | d | z | e | |
|---|---|---|---|---|---|---|---|---|
| | | | (g) | (Mol) | (g) | | (g) | (Mol) |
| 8 | Glycerin + 20 ÄO | (F) | 504,6 | 0,518 | 3 | $C_{12}$-Epoxid | 95,4 | 0,518 |
| 9 | Glycerin + 60 ÄO | (G) | 456,65 | 0,167 | 3 | $C_{18}$-Epoxid | 143,35 | 0,5 |
| 10 | Glycerin + 80 ÄO | (H) | 555,3 | 0,153 | 3 | $C_{18}$-Epoxid | 44,7 | 0,153 |
| 12 | Talgalkohol + 60 ÄO | (J) | 546,17 | 0,188 | 3 | $C_{18}$-Epoxid | 53,83 | 0,188 |
| 13 | hydriertes primäres Talgamin + 50 ÄO | (K) | 1238,75 | 0,5 | 2,48 | $C_{12}$-Epoxid | 92,0 | 0,5 |
| 11 | ALFOL C 12 + 20 ÄO | (L) | 473,4 | 0,442 | 3 | $C_{18}$-Epoxid | 126,6 | 0,442 |

A3HD32023 EP

Beispiel 3
────────────

$\underline{X}$ g des bei 60 °C geschmolzenen Distearyldimethylammoniumchlorid 75%ig (ca. 10 % Wassser, ca. 15 % Isopropanol) werden unter
Rühren in die auf 60 °C erhitzte Lösung aus $\underline{y}$ g Wasser und $\underline{z}$ g
des erfindungsgemäßen Dispergators zugefügt. Nach Abkühlen auf
40 °C werden nacheinander 1 g Parfümöl, 0,6 g einer 15%igen
wäßrigen $NaH_2PO_4$ x $H_2O$-Lösung sowie ca. 12 Tropfen einer
1%igen Farbstoff-Lösung zugesetzt.

Es wird bewertet:

1. Die KOnsistenz der Dispersion während der Herstellung bei
   40 °C vor Zugabe des Salzes,

2. die Konsistenz der Dispersion bei 35 °C nach Zugabe des
   Salzes,

3. die Konsistenz bei Raumtemperatur sofort nach der Herstellung,

4. Verhalten der Dispersion nach 3 Tagen

   a) selbstemulgierende Eigenschaften

   b) Haftung an Glaswand

   c) Konsistenz bzw. Viskosität bei 20 °C mittels
      Brookfield-Viskosimeter

5. Verhalten der Dispersion nach Lagerung von 10 Tagen

   a) bei Raumtemperatur: Stbilität

   b) bei 45 °C: - Stabilität
                 - Konsistenz

Tabelle 3  Zusammensetzung der Dispersionen gemäß Beispiel 3

| Vers. Nr. | Pro-dukt | x (g) 75 % Distearyl-dimethyl-ammonium-chlorid | y (g) Wasser | z(g) des erfin-dungsgemäßen Dispergators | (g) Parfümöl | (g) $NaH_2PO_4$ x $H_2O$ | Tropfen Farbstoff-Lösung (1%ig) | Bemerkungen zur Herstellung der Dispersionen |
|---|---|---|---|---|---|---|---|---|
| 3 a | 1 | 16,4 | 79,5 | 2,5 | 1,0 | 0,6 | 12 Tropfen | |
| 3 b | 1 | 16,6 | 80,5 | 1,3 | 1,0 | 0,6 | 12 Tropfen | |
| 3 c | 2 | 16,4 | 79,5 | 2,5 | 1,0 | 0,6 | 12 Tropfen | |
| 3 d | 1 | 19,2 | 76,9 | 2,4 | 0,95 | 0,6 | 12 Tropfen | |
| 3 e | 1 | 16,7 | 77,5 | 1,5 | 1,0 | 1,7 | 12 Tropfen | (1,7 g $NaH_2PO_4$ x H20 in Wasservorlage |
| 3 f | 13 | 16,7 | 80,8 | 2,5 g + 1 g 1 n HCL | 2,5 | 1,65 | | |
| 3 g | 1 | 10,7 | 89,18 | 0,12 | 1,0 | 0,16 | 12 Tropfen | |
| 3 h | 1 | 24,0 | 73,07 | 2,93 | | 1,56 (Gesamt-menge) | | (portionsweise Zugabe an $NaH_2PO_4$ x $H_2O$ ne-ben Distearyldimethyl-ammoniumchlorid 75 %) |
| 3 i | 1 | 16,4 | 79,4 | 2,5 | 1,0 | 0,1 $CaCl_2$ | | ($CaCl_2$ statt $NaH_2PO_4$ x $H_2O$) |
| 3 k | 3 | 16,7 | 80,8 | 2,5 | 1,0 | 0,25 | 12 Tropfen | |
| 3 l | 4 | 16,7 | 80,8 | 2,5 | | 0,1 | | |
| 3 m | 5 | 16,7 | 80,8 | 2,5 | | 0,13 | | |

Tabelle 4 Bewertung der Dispersionen gemäß Beispiel 3

| Vers. Nr. | Pro-dukt | Konsistenz 40 °C ohne Salz | Konsistenz 35 °C mit Salz | Konsist. bei R. T. sof. nach Herstell. | nach 3 Tagen | | | Lagerverhalten nach 10 Tagen | | | |
|---|---|---|---|---|---|---|---|---|---|---|---|
| | | | | | selbst-emulg. Eigensch. | Haftung an Glaswand | Viskosi-tät bei 20°C mPa s | bei 20°C Stabi-lität | bei 45 °C Stabi-lität | Konsistenz bei 40°C | bei 20°C |
| 3 a | 1 | viskos 2.220 mPa s | flüssig 52 mPa s | flüssig | + bis ++ | ++ | 80 | + bis ++ | + | | flüssig |
| 3 b | 1 | viskos | flüssig 32 mPa s | flüssig | ++ | ++ | 47 | ++ | + bis − | | flüssig |
| 3 c | 2 | viskos 1.650 mPa s | flüssig 48 mPa s | flüssig | ++ | ++ | 100 | + | + | | viskos |
| 3 d | 1 | viskos | flüssig 95 mPa s | flüssig | + bis ++ | ++ | 180 | + | + | | viskos |
| 3 e | 1 | flüssig 173 mPa s | flüssig 25 mPa s | flüssig | + bis ++ | + | 50 | ++ | ++ | ++ | flüssig |
| 3 f | 13 | flüssig 916 mPa s | flüssig 50 mPa s | flüssig | + bis ++ | ++ | 87 | ++ | ++ | viskos flüssig | viskos |
| 3 g | 1 | viskos | flüssig | flüssig | ++ | ++ | 28 | ++ | ++ | flüssig | flüssig |
| 3 h | 1 | viskos | flüssig 130 mPa s | flüssig-viskos | − | − | flüssig-viskos | ++ | ++ | Gel | viskos-flüssig |
| 3 i | 1 | viskos | flüssig 37 mPa s | flüssig | ++ | ++ | 35 | ++ | + | | flüssig |
| 3 k | 3 | viskos | flüssig | flüssig | + bis ++ | + bis ++ | 63 | ++ | + | | flüssig |
| 3 l | 4 | viskos | flüssig | flüssig 200 mPa s | −− | −− | 200 | + bis − | + | | viskos-flüssig |
| 3 m | 5 | viskos | flüssig | flüssig | ++ | ++ | 58 | ++ | ++ | flüssig | flüssig |

0095580
A3HD32023 EP

## Beispiel 4

$\underline{X}$ g Distearyldimethylammoniumchlorid 75%ig (ca. 10 % Wasser, ca. 15 % Isopropanol) sowie $\underline{z}$ g des erfindungsgemäßen Dispergators werden bei 60 °C homogen gemischt. In diese 60 °C warme Schmelze wird $\underline{y}$ g Wasser von 60 °C unter Rühren eingebracht. Anschließend wird $NaH_2PO_4$ x $H_2O$ in Form einer 15%igen wäßrigen Lösung zugefügt und auf Raumtemperatur abgekühlt.

Es Wird bewertet:

1. Konsistenz bei Raumtemperatur sofort nach der Herstellung

2. Verhalten der Dispersion nach 3 Tagen

   a) selbstemulgierende Eigenschaften

   b) Haftung an Glaswand

   c) Konsistenz bzw. Viskosität bei 20 °C mittels Brookfield-Viskosimeter

3. Verhalten der Dispersion nach Lagerung von 10 Tagen

   a) bei Raumtemperatur: Stabilität

   b) bei 45 °C:      - Stabilität
                      - Konsistenz

Tabelle 5   Zusammensetzung der Dispersionen gemäß Beispiel 4

| Vers-Nr. | Pro-dukt | x (g) 75 % Distearyl-dimethyl-ammonium-chlorid | y (g) Wasser | z (g) des erfindungs-gemäßen Dispergators | (g) $NaH_2PO_4$ x $H_2O$ |
|---|---|---|---|---|---|
| 4 a | 8 | 20,0 | 79,2 | 0,8 | 0,3 |
| 4 b | 9 | 20,0 | 79,2 | 0,8 | 0,16 |
| 4 c | 11 | 20,0 | 79,2 | 0,8 | 0,13 |
| 4 d | 12 | 20,0 | 79,2 | 0,8 | 0,14 |
| 4 e | 11 | 12,5 | 86,5 | 1,0 | 0,18 |

Tabelle 6   Bewertung der Dispersionen gemäß Beispiel 4

| Vers-Nr. | Pro-dukt | Konstistenz bei Raumtem-peratur sofort nach Herst. | nach 3 Tagen | | | Lagerverhalten nach 10 Tagen | | |
|---|---|---|---|---|---|---|---|---|
| | | | selbstemulg. Eigenschaft. | Haftung an Glaswand | Konstistenz/ Viskosit. bei 20°C mPa s | bei R.T. Stabilit. | bei 45°C Stabilit. | Konstistenz |
| 4 a | 8 | flüssig | + bis ++ | + bis ++ | flüssig (107) | ++ | + | flüssig-viskos |
| 4 b | 9 | flüssig | + bis ++ | ++ | flüssig (167) | ++ | ++ | viskos |
| 4 c | 11 | flüssig | + | + | flüssig (191) | ++ | + | flüssig-vikos |
| 4 d | 12 | flüssig | + bis ++ | + | flüssig (112) | ++ | ++ | flüssig-viskos |
| 4 e | 11 | flüssig | ++ | + | flüssig (72) | ++ | ++ | flüssig-viskos |

0095580   A3HD32023 EP

Beispiel 5
_____

Es wurde entsprechend Methode C verfahren, jedoch mit dem Unterschied, daß die 60 °C warme Schmelze unter Rühren in y g
Wasser eingebracht wird.

Die Bewertung entsprach der im Beispiel 4 angegebenen.

Die Ergebnisse sind in den Tabellen 3 bis 8 zusammengestellt.

T a b e l l e  7  Zusammensetzung der Dispersion gemäß Beispiel 5

| Vers. Nr. | Pro-dukt | x (g) 75 % Distearyl-dimethyl-ammonium-chlorid | y (g) Wasser | z (g) des er-findungsge-mäßen Disper-gators | (g) $NaH_2PO_4$ x $H_2O$ |
|---|---|---|---|---|---|
| 5 a | 10 | 20,0 | 79,2 | 0,8 | 0,47 |

T a b e l l e  8  Bewertung der Dispersion gemäß Beispiel 5

| Vers-Nr. | Pro-dukt | Konstistenz bei Raumtemperatur sofort nach Herst. | nach 3 Tagen | | | Lagerverhalten nach 10 Tagen | | |
|---|---|---|---|---|---|---|---|---|
| | | | selbstemulg. Eigenschaft. | Haftung an Glaswand | Konstistenz/ Viskosit. bei 20°C mPa s | bei R.T. Stabilit. | bei 45°C Stabilit. | Konstistenz |
| 5 a | 10 | flüssig | ++ | ++ | flüssig (59) | ++ | ++ | flüssig-viskos |

0095580
A3HD32023 EP

Patentansprüche

1. Polyätherderivat, hergestellt durch stufenweise Anlagerung von 1 - 10 Molen je anlagerungsfähiger OH-Gruppe von langkettigen 1,2 Epoxiden mit einer Kettenlänge von 6 - 32 C- Atomen bei Temperaturen von 100 - 200 °C an Polyäthylenglykol-Kondensationsverbindungen, wobei das mittlere Molekulargewicht jeder Polyätherkette 200 - 5000 beträgt oder an Polyäthylenglykolpolypropylenglykol-Kondensationsverbindungen, wobei das mittlere Molekulargewicht jeder Polyätherkette 250 - 6000 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 1000 aufweist und jeder Polyäthylenglykolblock mit ein- oder mehrwertigen Alkoholen, Phenolen, Aminen und/oder Amiden kondensiert ist, wobei die Zahl der ersetzten aktiven Wasserstoffatome der Alkohole, Phenole, Amine und/oder Amide 1 - 6 beträgt, unter Verwendung von 0,1 - 1 Gew.-% Alkalihydroxid, bezogen auf die Gesamtmenge der Ausgangsstoffe.

2. Polyätherderivat nach Anspruch 1, hergestellt durch stufenweise Anlagerung von 1 - 10 Molen je anlagerungsfähiger OH-Gruppen von langkettigen 1,2 Epoxiden mit einer Kettenlänge von 6 - 32 C-Atomen bei Temperaturen von 100 - 200 °C an Polyäthylenglykol-Kondensationsverbindungen, wobei das mittlere Molekulargewicht jeder Polyätherkette 200 - 3500 beträgt oder an Polyäthylenglykolpolypropylenglykol-Kondensationsverbindungen, wobei das mittlere Molekulargewicht jeder Polyätherkette 250 - 3600 beträgt, deren Ketten aus wiederkehrenden Äthylenoxideinheiten und Propylenoxideinheiten je eihen Block bilden, wobei jeder Polypropylenglykolblock ein mittleres Molekulargewicht von höchstens 300 aufweist und jeder Polyäthylenglykolblock mit Sacchariden kondensiert ist, wobei die Zahl der bei den Sacchariden ersetzten aktiven Wasserstoffatome 1 - 6 beträgt, unter Verwendung von 0,1 - 1 Gew.-% Alkalihydroxid, bezogen auf die Gesamtmenge der Ausgangsstoffe.

3. Polyätherderivat nach Anspruch 2, hergestellt durch stufenweise Anlagerung von 1 - 3 Molen je anlagerungsfähiger OH-Gruppe von langkettigen 1,2 Epoxiden mit einer Kettenlänge von 10 - 24 C-Atomen bei Temperaturen von 100 - 200 °C an Polyäthylenglykol-Kondensationsverbindungen, wobei das mittlere Molekulargewicht jeder Polyätherkette 300 - 2000 beträgt oder an Polyäthylenglykolpolypropylenglykol-Kondensationsverbindungen, wobei das mittlere Molekulargewicht jeder Polyätherkette 350 - 3250 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 300 aufweist und jeder Polyäthylenglykolblock mit Sacchariden kondensiert ist, wobei die Zahl der bei den Sacchariden ersetzten aktiven Wasserstoffatome 1 - 3 beträgt, unter Verwendung von 0,1 - 1 Gew.-% Alkalihydroxid, bezogen auf die Gesamtmenge der Ausgangsstoffe.

4. Polyätherderivat nach Anspruch 1, hergestellt durch stufenweise Anlagerung von 1 - 5 Molen je anlagerungsfähiger OH-Gruppe von langkettigen 1,2 Epoxiden mit einer Kettenlänge von 6 - 32 C-Atomen bei Temperaturen von 100 - 200 °C an Polyäthylenglykol-Kondensationsverbindungen, wobei das mittlere Molekulargewicht jeder Polyätherkette 500 - 4500 beträgt oder an Polyäthylenglykolpolypropylenglykol-Kondensationsverbindungen, wobei das mittlere Molekulargewicht jeder Polyätherkette 600 - 5000 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 200 aufweist und jeder Polyäthylenglykolblock mit einem einwertigen Alkohol mit 8 - 18 C-Atomen kondensiert ist, unter Verwendung von 0,1 - 1 Gew.-% Alkalihydroxid, bezogen auf die Gesamtmenge der Ausgangsstoffe.

5. Polyätherderivat nach Anspruch 4, hergestellt durch stufenweise Anlagerung von 1 - 10 Molen je anlagerungsfähiger OH-Gruppe von langkettigen 1,2 Epoxiden mit einer Kettenlänge von 12 - 18 C-Atomen bei Temperaturen von 100 - 200 °C an Polyäthylenglykol-Kondensationsverbindungen, wobei das mittlere Molekulargewicht jeder Polyätherkette 900 - 3500 beträgt oder an Polyäthylenglykolpolypropylenglykol-Kondensationsverbindungen, wobei das mittlere Molekulargewicht jeder Polyätherkette 950 - 4200 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 200 aufweist und jeder Polyäthylenglykolblock mit einem einwertigen Alkohol mit 8 - 18 C-Atomen kondensiert ist, unter Verwendung von 0,1 - 1 Gew.-% Alkalihydroxid, bezogen auf die Gesamtmenge der Ausgangsstoffe.

6. Polyätherderivat nach Anspruch 1, hergestellt durch stufenweise Anlagerung von 1 - 5 Molen je anlagerungsfähiger OH-
Gruppe von langkettigen 1,2 Epoxiden mit einer Kettenlänge
von 6 - 32 C-Atomen bei Temperaturen von 100 - 200 °C an
Polyäthylenglykol-Kondensationsverbindungen, wobei das mittlere Molekulargewicht jeder Polyätherkette 500 - 4500 beträgt oder an Polyäthylenglykolpolypropylenglykol-Kondensationsverbindungen, wobei das mittlere Molekulargewicht
jeder Polyätherkette 550 - 5000 beträgt, deren Ketten aus
widerkehrenden Äthylenoxideinheiten und Propylenoxideinheiten je einen Block bilden, wobei jeder Polypropylenglykolblock ein mittleres Molekulargewicht von höchstens
200  aufweist und jeder Polyäthylenglykolblock mit geradkettigen Polyalkoholen mit 3 - 6 OH-Gruppen kondensiert ist,
wobei die Zahl der bei den Polyalkoholen erstzten aktiven
Wasserstoffatome 3 - 6 beträgt, unter Verwendung von 0,1 -
1 Gew.-% Alkalihydroxid, bezogen auf die Gesamtmenge der
Ausgangsstoffe.

7. Polyätherderivat nach Anspruch 6, hergestellt durch stufenweise Anlagerung von 1 - 10 Molen je anlagerungsfähiger OH-
Gruppe von langkettigen 1,2 Epoxiden mit einer Kettenlänge
von 12 bis 18 C-Atomen bei Temperaturen von 100 - 200 °C an
Polyäthylenglykol-Kondensationsverbindungen, wobei das mittlere Molekulargewicht jeder Polyätherkette 900 - 3500 beträgt oder an Polyäthylenglykolpolypropylenglykol-Kondensationsverbindungen, wobei das mittlere Molekulargewicht
jeder Polyätherkette 950 - 4200 beträgt, deren Ketten aus
wiederkehrenden Äthylenoxideinheiten und Propylenoxideinheiten je einen Block bilden, wobei jeder Polypropylenglykolblock ein mittleres Molekulargewicht von höchstens
200 aufweist und jeder Polyäthylenglykolblock mit geradkettigen Polyalkoholen kondensiert ist, wobei die Zahl der bei den Polyalkoholen ersetzten aktiven Wasserstoffatome 3 - 6 beträgt, unter Verwendung von 0,1 - 1 Gew.-% Alkalihydroxid, bezogen auf die Gesamtmenge der Ausgangsstoffe.

8. Polyätherdrivat nach Anspruch 1, hergestellt durch stufenweise Anlagerung von 1 - 5 Molen je anlagerungsfähiger OH-Gruppe von langkettigen 1,2 Epoxiden mit einer Kettenlänge von 6 - 32 C-Atomen bei Temperaturen von 100 - 200 °C an Polyäthylenglykol-Kondensationsverbindungen, wobei das mittlere Molekulargewicht jeder Polyätherkette 200 - 4500 beträgt oder an Polyäthylenglykolpolypropylenglykol-Kondensationsverbindungen, wobei das mittlere Molekulargewicht jeder Polyäterkette 250 - 5000 beträgt, deren Ketten aus wiederkehrenden Ähylenoxideinheiten und Propylenoxideinheiten je einen Block bilden, wobei jeder Polypropylenglykolblock ein mittleres Molekulargewicht von höchstens 200 aufweist und jeder Polyäthylenglykolblock mit Aminen und/oder Amiden kondensiert ist, wobei die Zahl der bei den Aminen und/oder Amiden ersetzten aktiven Wasserstoffatome 1 - 4 beträgt, unter Verwendung von 0,1 - 1 Gew.-% Alkalihydroxid, bezogen auf die Gesamtmenge der Ausgangsstoffe.

9. Polyätherderivat nach Anspruch 8, hergestellt durch stufenweise Anlagerung von 1 - 3 Molen je anlagerungsfähiger OH-Gruppe von langkettigen 1,2 Epoxiden mit einer Kettenlänge von 12 - 18 C-Atomen bei Temperaturen von 100 - 200 °C an Polyäthylenglykol-Kondensationsverbindunge, wobei das mittlere Molekulargewicht jeder Polyätherkette 450 - 4000 beträgt oder an Polyäthylenglykolpolypropylenglykol-Kondensationsverbindungen, wobei das mittlere Molekulargewicht jeder Polyätherkette 550 - 4200 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 200 aufweist und jeder Polyäthylenglykolblock mit Aminen und/oder Amiden kondensiert ist, wobei die Zahl der bei den Aminen und/oder Amiden ersetzten aktiven Wasserstoffatome 1 - 4 beträgt, unter Verwendung von 0,1 - 1 Gew.-% Alkalihydroxid, bezogen auf die Gesamtmenge der Ausgangsstoffe.

10. Polyätherderivat nach den Ansprüchen 8 - 9, dadurch gekennzeichnet, daß die Amine in Form ihrer Salze vorliegen.

11. Verwendung der Polyätherderivate nach den Ansprüchen 1 - 10 als Dispergatoren in konzentrierten Weichspülerdispersionen auf der Basis von quaternären Ammoniumsalzen.

12. Verwendung der Polyätherderivate nach den Ansprüchen 1 - 10 in mindestens 10 Gew.-% Aktivsubstanz enthaltenden Weichspülerdispersionen auf der Basis von quaternären Ammoniumsalzen.

13. Mittel zum Weichspülen von Textilien auf der Basis quaternärer Ammoniumsalze, dadurch gekennzeichnet, daß die Dispersion enthält:

    8 - 25 Gew.-% von an sich bekannten und als Weichspüler geeigneten quaternären Ammoniumsalzen, 0,1 - 10 Gew.-% eines Dispergators gemäß den Ansprüchen 1 - 11, gegebenenfalls 0,1 - 5 Gew.-% eines anorganischen Salzes von Elementen der 1. - 3. Hauptgruppe des Periodensystems sowie Wirkstoffe wie Farbstoffe, Duftstoffe u. ä. und 60 - 91,9 Gew.-% Wasser.

14. Verfahren zur Herstellung eines Mittels zum Weichspülen von Textilien gemäß Anspruch 13, dadurch gekennzeichnet, daß man den Dispergator in der vorgesehenen Menge Wasser löst und in diese Lösung bei 45 - 70 °C das quaternäre Ammoniumsalz und gegebenenfalls gleichmäßig, gleichzeitig aber getrennt 0,5 Gew.-%, bezogen auf die fertige Dispersion, einer 15%igen wäßrigen Lösung eines anorganischen Salzes von Elementen der 1. - 3. Hauptgruppe des Periodensystems einbringt.

15. Verfahren zur Herstellung eines Mittels zum Weichspülen von Textilien gemäß Anspruch 13, dadurch gekennzeichnet, daß Dispergator und quaternäres Ammoniumsalz zunächst bei 45 - 70 °C homogen gemischt werden und diese Mischung in die vorgesehene Menge Wasser von 45 - 70 °C eingebracht wird.

16. Verfahren zur Herstellung eines Mittels zum Weichspülen von Textilien gemäß Anspruch 13, dadurch gekennzeichnet, daß Dispergator und quaternäres Ammoniumsalz zunächst bei 45 - 70 °C homogen gemischt werden und daß in diese Mischung die vorgesehene Menge Wasser von 45 - 70 °C eingebracht wird.

Patentansprüche für Österreich

1. Verfahren zur Herstellung eines Polyätherderivates durch stufenweise Anlagerung von 1 - 10 Molen je anlagerungsfähiger OH-Gruppe von langkettigen 1,2 Epoxiden mit einer Kettenlänge von 6 - 32 C-Atomen bei Temperaturen von 100 - 200 °C an Polyäthylenglykol-Kondensationsverbindungen, wobei das mittlere Molekulargewicht jeder Polyätherkette 200 - 5000 beträgt oder an Polyäthylenglykolpolypropylenglykol-Kondensationsverbindungen, wobei das mittlere Molekulargewicht jeder Polyätherkette 250 - 6000 beträgt, deren Ketten aus wiederkehrenden Äthylenoxideinheiten und Propylenoxideinheiten je einen Block bilden, wobei jeder Polypropylenglykolblock ein mittleres Molekulargewicht von höchstens 1000 aufweist und jeder Polyäthylenglykolblock mit ein- oder mehrwertigen Alkoholen, Phenolen, Aminen und/oder Amiden kondensiert wurde, wobei die Zahl der ersetzten aktiven Wasserstoffatome der Alkohole, Phenole, Amine und/oder Amide 1 - 6 beträgt, unter Verwendung von 0,1 - 1 Gew.-% Alkalihydroxid, bezogen auf die Gesamtmenge der Ausgangsstoffe.

2. Verfahren nach Anspruch 1, dadurch gekennzeichnet, daß bei den Polyäthylenglykol-Kondensationsverbindungen das mittlere Molekulargewicht jeder Polyätherkette 200 - 3500 beträgt oder bei Polyäthylenglykolpolypropylenglykol-Kondensationsverbindungen das mittlere Molekulargewicht jeder Polyätherkette 250 - 3600 beträgt und jeder Polypropylenglykolblock ein mittleres Molekulargewicht von höchstens 300 aufweist und jeder Polyäthylenglykolblock mit Sacchariden kondensiert wurde, wobei die Zahl der bei den Sacchariden ersetzten aktiven Wasserstoffatome 1 - 6 beträgt.

3. Verfahren nach Anspruch 2, dadurch gekennzeichnet, daß 1 - 3 Mole langkettige 1,2 Epoxide mit einer Kettenlänge von 10 - 24 C-Atomen je anlagerungsfähiger OH-Gruppe an Polyäthylenglykol-Kondensationsverbindungen stufenweise angelagert werden, wobei das mittlere Molekulargewicht jeder Polyätherkette 300 - 2000 beträgt oder an Polyäthylenglykolpolypropylenglykol-Kondensationsverbindungen, wobei das mittlere Molekulargewicht jeder Polyätherkette 350 - 3250 beträgt und jeder Polyäthylenglykolblock mit Sacchariden kondensiert wurde, wobei die Zahl der bei den Sacchariden ersetzten aktiven Wasserstoffatome 1 - 3 beträgt.

4. Verfahren nach Anspruch 1, dadurch gekennzeichnet, daß 1 - 5 Mole langkettige 1,2 Epoxide mit einer Kettenlänge von 6 - 32 C-Atomen je anlagerungsfähiger OH-Gruppe an Polyäthylenglykol-Kondensationsverbindungen stufenweise angelagert werden, wobei das mittlere Molekulargewicht jeder Polyätherkette 500 - 4500 beträgt oder an Polyäthylenglykolpolypropylenglykol-Kondensationsverbindungen, wobei das mittlere Molekulargewicht jeder Polyätherkette 600 - 5000 beträgt und jeder Polypropylenglykolblock ein mittleres Molekulargeweicht von höchstens 200 aufweist und daß jeder Polyäthylenglykolblock mit einem einwertigen Alkohol mit 8 - 18 C-Atomen kondensiert wurde.

5. Verfahren nach Anspruch 4, dadurch gekennzeichnet, daß 1 - 10 Mole langkettige 1,2 Epoxide mit einer Kettenlänge von 12 - 18 C-Atomen je anlagerungsfähiger OH-Gruppe an Polyäthylenglykol-Kondensationsverbindungen stufenweise angelagert werden, wobei das mittlere Molekulargewicht jeder Polyätherkette 900 - 3500 beträgt oder an Polyäthylenglykolpolypropylenglykol-Kondensationsverbindungen, wobei das mittlere Molekulargewicht jeder Polyätherkette 950 - 4200 beträgt.

6. Verfahren nach Anspruch 1, dadurch gekennzeichnet, daß
1 - 5 Mole langkettige 1,2 Epoxide mit einer Kettenlänge von
6 - 32 C-Atomen je anlagerungsfähiger OH-Gruppe an Polyäthylenglykol-Kondensationsverbindungen, wobei das mittlere Molekulargewicht jeder Polyätherkette 500 - 4500 beträgt oder
an Polyäthylenglykolpolypropylenglykol-Kondensationsverbindungen, wobei das mittlere Molekulargewicht jeder Polyätherkette 550 - 5000 beträgt und jeder Polypropylenglykolblock
ein mittleres Molekulargewicht von höchstens 200 aufweist und
daß jeder Polyäthylenglykolblock mit geradkettigen Polylakoholen mit 3 - 6 OH-Gruppen kondensiert wurde, wobei die Zahl
der bei den Polyalkoholen ersetzten aktiven Wasserstoffatome
3 - 6 beträgt.

7. Verfahren nach Anspruch 6, dadurch gekennzeichnet, daß
1 - 10 Mole langkettige 1,2 Epoxide mit einer Kettenlänge
von 12 bis 18 C-Atomen je anlagerungsfähiger OH-Gruppe an
Polyäthylenglykol-Kondensationsverbindungen, wobei das mittlere Molekulargewicht jeder Polyätherkette 900 - 3500 beträgt oder an Polyäthylenglykolpolypropylenglykol-Kondensationsverbindungen, wobei das mittlere Molekulargewicht jeder Polyätherkette 950 - 4200 beträgt.

8. Verfahren nach Anspruch 1, dadurch gekennzeichnet, daß 1 - 5 Mole langkettige 1,2 Epoxide mit einer Kettenlänge von 6 - 32 C-Atomen je anlagerungsfähiger OH-Gruppe an Polyäthylenglykol-Kondensationsverbindungen, wobei das mittlere Molekulargewicht jeder Polyätherkette 200 - 4500 beträgt oder an Polyäthylenglykolpolypropylenglykol-Kondensationsverbindungen, wobei das mittlere Molekulargewicht jeder Polyätherkette 250 - 5000 beträgt und jeder Polypropylenglykolblock ein mittleres Molekulargewicht von höchstens 200 aufweist und daß jeder Polyäthylenglykolblock mit Aminen und/oder Amiden kondensiert wurde, wobei die Zahl der bei den Aminen und/oder Amiden ersetzten aktiven Wasserstoffatome 1 - 4 beträgt.

9. Verfahren nach Anspruch 8, dadurch gekennzeichnet, daß 1 - 3 Mole langkettige 1,2 Epoxide mit einer Kettenlänge von 12 - 18 C-Atomen je anlagerungsfähiger OH-Gruppe an Polyäthylenglykol-Kondensationsverbindungen, wobei das mittlere Molekulargewicht jeder Polyätherkette 450 - 4000 beträgt oder an Polyäthylenglykolpolypropylenglykol-Kondensationsverbindungen, wobei das mittlere Molekulargewicht jeder Polyätherkette 550 - 4200 beträgt.

10. Verfahren nach den Ansprüchen 8 - 9, dadurch gekennzeichnet, daß die Amine in Form ihrer Salze vorliegen.

11. Verwendung der Polyätherderivate hergestellt nach den Ansprüchen 1 - 10 als Dispergatoren in konzentrierten Weichspülerdispersionen auf der Basis von quaternären Ammoniumsalzen.

12. Verwendung der Polyätherderivate hergestellt nach den Ansprüchen 1 - 10 in mindestens 10 Gew.-% Aktivsubstanz enthaltenden Weichspülerdispersionen auf der Basis von quaternären Ammoniumsalzen.

13. Mittel zum Weichspülen von Textilien auf der Basis quaternärer Ammoniumsalze, dadurch gekennzeichnet, daß die Dispersion enthält:

    8 - 25 Gew.-% von an sich bekannten und als
    Weichspüler geeigneten quaternären Ammoniumsalzen,
    0,1 - 10 Gew.-% eines Dispergators gemäß den
    Ansprüchen 1 - 11,
    gegebenenfalls 0,1 - 5 Gew.-% eines anorganischen Salzes von Elementen der 1. - 3. Hauptgruppe des Periodensystems
    sowie Wirkstoffe wie Farbstoffe, Duftstoffe u. ä.
    und 60 - 91,9 Gew.-% Wasser.

14. Verfahren zur Herstellung eines Mittels zum Weichspülen
    von Textilien gemäß Anspruch 13, dadurch gekennzeichnet,
    daß man den Dispergator in der vorgesehenen Menge Wasser
    löst und in diese Lösung bei 45 - 70 °C das quaternäre
    Ammoniumsalz und gegebenenfalls gleichmäßig, gleichzeitig
    aber getrennt 0,5 Gew.-%, bezogen auf die fertige Dispersion, einer 15%igen wäßrigen Lösung eines anorganischen
    Salzes von Elementen der 1. - 3. Hauptgruppe des Periodensystems einbringt.

15. Verfahren zur Herstellung eines Mittels zum Weichspülen
    von Textilien gemäß Anspruch 13, dadurch gekennzeichnet,
    daß Dispergator und quaternäres Ammoniumsalz zunächst bei
    45 - 70 °C homogen gemischt werden und diese Mischung in
    die vorgesehene Menge Wasser von 45 - 70 °C eingebracht
    wird.

16. Verfahren zur Herstellung eines Mittels zum Weichspülen von Textilien gemäß Anspruch 13, dadurch gekennzeichnet, daß Dispergator und quaternäres Ammoniumsalz zunächst bei 45 - 70 °C homogen gemischt werden und daß in diese Mischung die vorgesehene Menge Wasser von 45 - 70 °C eingebracht wird.